Europäisches Patentamt

European Patent Office

Office européen des brevets

(11) Veröffentlichungsnummer: **0 060 458**
A2

# EUROPÄISCHE PATENTANMELDUNG

(21) Anmeldenummer: 82101721.7

(22) Anmeldetag: 05.03.82

(51) Int. Cl.³: **H 05 B 41/392**

(30) Priorität: 16.03.81 CH 1764/81

(43) Veröffentlichungstag der Anmeldung: 22.09.82
Patentblatt 82/38

(84) Benannte Vertragsstaaten: **AT BE DE FR GB IT NL SE**

(71) Anmelder: **Koch Elektronik + Apparatebau AG,
Zugerstrasse 88, CH-6314 Unterägeri (CH)**

(72) Erfinder: **Jucker, Peter, Kanalweg 1, CH-6314 Unterägeri
(CH)**

(74) Vertreter: **Patentanwaltsbureau Scheidegger, Zwicky &
Co., Stampfenbachstrasse 48 Postfach, CH-8023 Zürich
(CH)**

(54) **Einrichtung zur Helligkeitsregulierung einer Fluoreszenzlampe.**

(57) Bei dieser Einrichtung bilden die in ihrer Helligkeit zu
regulierende Fluoreszenzlampe (24) und eine Vorschaltimpedanz (25), welche zumindest einen Kondensator (26) aufweist, eine Reihenschaltung (28). Letztere ist mittels einer
ersten elektronischen Schalteranordnung (31) periodisch an
eine Gleichstromquelle (20, 23) anschließbar, wobei jeweils
der Kondensator (26) geladen wird und ein Stromimpuls
durch die Lampe (24) fließt. Mittels einer zweiten elektronischen Schalteranordnung (32) ist die Reihenschaltung (28)
periodisch kurzschließbar, wobei jeweils der Kondensator
(26) entladen wird und durch die Lampe (24) ein Stromimpuls entgegengesetzter Polarität fließt. Die beiden Schalteranordnungen (31, 32) sind abwechslungsweise durch Taktsignale (u1, u2) gesteuert, deren Frequenz zum Regulieren
der Helligkeit der Lampe (24) veränderbar ist. Zumindest
eine (31) der Schalteranordnungen (31, 32) weist einen
steuerbaren Gleichrichter (34) auf, und das zum Ansteuern
desselben dienende Taktsignal (u1) besteht aus einer Folge
von Impulsen, deren Dauer jeweils beträchtlich kürzer als
die Dauer eines jeden Stromimpulses ist. Ein Impulstransformator (52) mit galvanisch getrennten Wicklungen (51, 53)
dient der Übertragung des Taktsignals (u1), so daß die
unterschiedlichen Potentiale der Taktsignaleingänge (35,
36; 41, 42) der beiden Schalteranordnungen (31, 32) kein
Erschwernis bilden.

ACTORUM AG

Einrichtung zur Helligkeitsregulierung einer Fluoreszenzlampe

Die Erfindung betrifft eine Einrichtung zur Helligkeitsregulierung einer Fluoreszenzlampe, die zusammen mit einer Vorschaltimpedanz eine Reihenschaltung bildet, wobei die Vorschaltimpedanz zumindest einen elektrischen Kondensator aufweist.

Es ist bekannt, Fluoreszenzlampen in ihrer Helligkeit ohne Phasenanschnittsteuerung zu regulieren mittels einer Einrichtung mit zwei durch Taktsignale steuerbaren elektronischen Schalteranordnungen, von denen die eine parallel zur genannten Reihenschaltung und die andere in Serie mit der Reihenschaltung liegt und dazu bestimmt ist, die Reihenschaltung mit einer Gleichstromquelle zur Speisung der Lampe zu verbinden, und mit einer elektronischen Steuereinrichtung zum Erzeugen der Taktsignale zum Steuern der beiden Schalteranordnungen derart, dass diese periodisch abwechselnd einen leitenden Zustand annehmen, so dass durch aufeinanderfolgendes Laden und Entladen des Kondensators der Vorschaltimpedanz ein durch die Lampe fliessender Strom in Form von Stromimpulsen mit wechselnder Polarität entsteht, wobei die Kurvenform und die Dauer eines jeden Stromimpulses durch die elektrischen Eigenschaften der genannten Reihenschaltung gegeben sind und die die Helligkeit der Lampe bestimmende Wiederholungsfrequenz der Stromimpulse von der einstellbaren Frequenz der Taktsignale abhängig ist.

Bei der bekannten Einrichtung weisen die beiden Schalteranordnungen je einen Leistungstransistor auf. Da diese Transistoren notwendigerweise auf verschiedenen Potentialen liegen, müssen auch die Taktsignale zum Ansteuern der beiden Transistoren entsprechend unterschiedliche Potentiale aufweisen. Um dies zu erreichen, wird eine relativ aufwendige elektronische Steuereinrichtung für die Erzeugung der Taktsignale benötigt. Dies ist wohl auch der Grund dafür, dass die bekannte Einrichtung nur für Fluoreszenzlampen mit verhältnismässig niedriger Betriebsspannung realisiert worden ist.

Es ist nun die Aufgabe der vorliegenden Erfindung, eine Einrichtung der genannten Art so auszugestalten, dass sie zur Regulierung der Helligkeit von Fluoreszenzlampen mit höherer Betriebsspannung geeignet ist und dennoch die Steuereinrichtung zur Erzeugung der Taktimpulse lediglich einen wirtschaftlich tragbaren Aufwand erfordert.

Diese Aufgabe ist bei einer Einrichtung der eingangs genannten Art erfindungsgemäss dadurch gelöst, dass mindestens eine der beiden elektronischen Schalteranordnungen derart ausgebildet ist, dass deren leitender Zustand jeweils nach Ansteuerung mit einem im Vergleich zur Dauer jedes Stromimpulses kurzen Taktimpuls bis zum Ende des betreffenden Stromimpulses aufrecht erhalten bleibt, und dass die elektronische Steuereinrichtung zur Erzeugung von galvanisch getrennten Taktimpulsen für die beiden Schalteranordnungen ausgebildet ist und jeder Taktimpuls für die genannte mindestens eine Schalteranordnung zeitlich kürzer ist als die Dauer eines jeden Stromimpulses.

Die im Vergleich zur Dauer jedes Stromimpulses kurzen Taktimpulse lassen sich z.B. mittels eines einfachen und preisgünstigen Impulstransformators mit galvanisch getrennten Primär- und Sekundärwicklungen übertragen, wobei die Potentialdifferenz zwischen den Taktimpulsen zur Steuerung der einen bzw. der andern Schalteranordnung überhaupt kein Problem mehr verursacht.

Die Merkmale der Erfindung und spezieller Ausführungsformen des Erfindungsgegenstandes ergeben sich aus den Patentansprüchen und werden nachstehend anhand der beigefügten Zeichnungen rein beispielsweise näher erläutert.

Es zeigt:

Fig. 1    das elektrische Schaltschema eines ersten Ausführungsbeispiels der erfindungsgemässen Einrichtung zur Helligkeitsregulierung einer Fluoreszenzlampe;

Fig. 2    den zeitlichen Verlauf von elektrischen Grössen, die
          in der Einrichtung nach Fig. 1 auftreten;

Fig. 3    das elektrische Schaltschema eines gegenüber Fig. 1
          nur wenig modifizierten Ausführungsbeispiels der Einrichtung;

Fig. 4    das elektrische Schaltschema einer anderen Ausführungsvariante der Einrichtung nach Fig. 1;

Fig. 5    das elektrische Schaltschema einer Teilvariante des
          Ausführungsbeispiels nach Fig. 1;

Fig. 6    den zeitlichen Verlauf von elektrischen Grössen, die
          in  der Einrichtung mit der Teilvariante gemäss Fig. 5
          auftreten;

Fig. 7    das elektrische Schaltschema eines weiteren Ausführungsbeispiels der erfindungsgemässen Einrichtung;

Fig. 8    den zeitlichen Verlauf von elektrischen Grössen, die in
          der Einrichtung nach Fig. 7 auftreten;

Fig. 9    das elektrische Schaltschema eines ähnlichen anderen
          Ausführungsbeispiels der Einrichtung;

Fig. 10   den zeitlichen Verlauf von elektrischen Grössen, die in
          der Einrichtung gemäss Fig. 9 auftreten;

Fig. 11   das elektrische Schaltschema eines gegenüber Fig. 1
          teilweise geänderten weiteren Ausführungsbeispiels der
          Einrichtung.

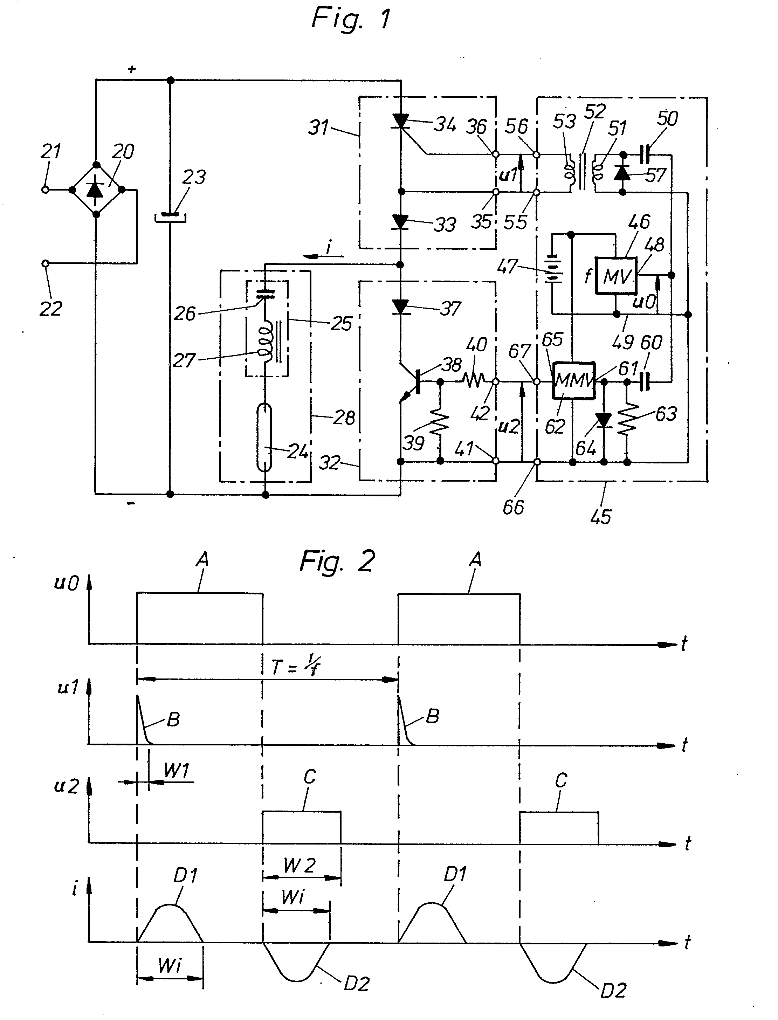

Es wird nun zunächst auf Fig. 1 verwiesen, in welcher mit 20 ein
Brückengleichrichter dargestellt ist, dessen eine Diagonale mit
zwei Klemmen 21 und 22 für den Anschluss an ein Wechselstromverteilnetz verbunden ist. An der andern Diagonale des Brückengleichrichters 20 entsteht eine Gleichspannung, die mittels
eines Kondensators 23 geglättet wird. Der Brückengleichrichter 20 und der Kondensator 23 bilden zusammen eine Gleichstromquelle zur Speisung einer Fluoreszenzlampe 24, deren Helligkeit
regulierbar sein soll.

Der Fluoreszenzlampe 24 ist eine Vorschaltimpedanz 25 zugeordnet, die einen elektrischen Kondensator 26 und eine Induktionsspule 27 aufweist. Die Fluoreszenzlampe 24 und die Vorschaltimpedanz 25 bilden zusammen eine Reihenschaltung 28, die einerseits unmittelbar mit dem Minuspol der Gleichstromquelle 20, 23
verbunden ist und anderseits mittels einer ersten elektronischen
Schalteranordnung 31 mit dem Pluspol der Gleichstromquelle 20,
23 verbindbar ist. Eine zweite elektronische Schalteranordnung
32 liegt parallel zur Reihenschaltung 28.

Die erste elektronische Schalteranordnung 31 weist eine Diode
33 und einen gesteuerten Halbleitergleichrichter 34, z.B. einen
Thyristor, sowie zwei Anschlussklemmen 35 und 36 auf, welche
mit der Kathode bzw. der Steuerelektrode des Thyristors 34 in
Verbindung stehen und zum Zuführen eines Taktsignals u1 zum
Steuern des Thyristors dienen. Die Diode 33 und der Thyristor
34 sind in Serie zwischen der Reihenschaltung 28 und dem Pluspol
der Gleichstromquelle 20, 23 angeordnet.

Die zweite elektronische Schalteranordnung 32 weist eine Diode
37, einen Leistungstransistor 38, zwei elektrische Widerstände
39 und 40 sowie zwei Anschlussklemmen 41 und 42 auf, welche zum
Zuführen eines Taktsignals u2 zum Steuern des Transistors 38
dienen. Die Diode 37 und die Kollektor-Emitter-Strecke des
Transistors 38 sind in Serie geschaltet und parallel zur Reihenschaltung 28 angeordnet. Der eine Widerstand 39 liegt zwischen
der Basis und dem Emitter des Transistors 38, während der andere
Widerstand 40 zwischen die Basis des Transistors einerseits und
die Klemme 42 anderseits eingeschaltet ist. Die andere Klemme 41
steht mit dem Emitter des Transistors 38 in Verbindung.

Für die Erzeugung der beiden Taktsignale u1 und u2 ist eine
elektronische Steuereinrichtung 45 vorhanden. Diese weist einen astabilen Multivibrator 46 auf, der durch eine Hilfsstromquelle
47 gespeist wird und zwischen einem Signalausgang 48 und einem
Masseleiter 49 ein Ausgangssignal $u_o$ in Form einer Folge von
rechteckigen Spannungsimpulsen A erzeugt, wie in Fig. 2 gezeigt
ist. Die Wiederholungsfrequenz $f = 1/T$ der Spannungsimpulse ist
einstellbar. Der Signalausgang 48 des Multivibrators 46 ist über
einen Kondensator 50 mit dem einen Ende der Primärwicklung 51
eines Impulstransformators 52 verbunden, während das andere Ende
der Wicklung 51 mit dem Masseleiter 49 in Verbindung steht. Die
von der Primärwicklung 51 galvanisch getrennte Sekundärwicklung
53 des Impulstransformators ist mit zwei Ausgangsklemmen 55 und
56 verbunden, die an die Anschlussklemmen 35 und 36 der ersten
Schalteranordnung 31 angeschlossen sind. Mittels des Kondensators 50 werden jeweils bei den ansteigenden Flanken der Spannungsimpulse A des Ausgangssignals $u_o$ positive Nadelimpulse und
bei den abfallenden Flanken negative Nadelimpulse übertragen.
Zum Unterdrücken der negativen Nadelimpulse ist eine Diode 57
parallel zur Primärwicklung 51 des Impulstransformators 52 geschaltet, so dass das den Anschlussklemmen 35 und 36 der Schalteranordnung 31 zugeführte Taktsignal u.1 nur aus positiven
Nadelimpulsen B besteht, deren Dauer W1 jeweils relativ kurz
ist, wie Fig. 2 zeigt.

Der Signalausgang 48 des astabilen Multivibrators 46 ist ferner
über einen zweiten Kondensator 60 mit dem Signaleingang 61 eines
monostabilen Multivibrators 62 verbunden, der ebenfalls aus der
Hilfsstromquelle 47 gespeist wird. Zwischen dem Eingäng 61 und
dem Masseleiter 49 liegen ein Widerstand 63 und eine Diode 64.
Mittels des Kondensators 60 werden jeweils bei den ansteigenden
Flanken der Spannungsimpulse A des Ausgangssignals $u_o$ positive
Nadelimpulse und bei den abfallenden Flanken negative Nadelimpulse übertragen. Durch die Diode 64 werden jedoch die positiven
Nadelimpulse unterdrückt, so dass nur negative Nadelimpulse jeweils bei den abfallenden Flanken des Ausgangssignals $u_o$ an den
Signaleingang 61 des astabilen Multivibrators 62 gelangen. Ein
Signalausgang 65 des letzteren und der Masseleiter 49 sind je mit einer Anschlussklemme 66 bzw. 67 verbunden. Diese Klemmen 66 und 67 sind an die Anschlussklemmen 41 und 42 der zweiten Schalteranordnung 32 angeschlossen. Jeweils nach dem Ansteuern des monostabilen Multivibrators 62 mit einem Nadelimpuls am Signaleingang 61 tritt am Signalausgang 65 ein rechteckiger Spannungsimpuls auf, dessen Dauer D2 wesentlich länger als die Dauer W1 eines jeden Nadelimpulses ist, aber kürzer als die halbe Periode T des Ausgangssignals $u_o$. Das den Anschlussklemmen 41 und 42 der zweiten Schalteranordnung 32 zugeführte Taktsignal u2 besteht somit aus einer Folge von Rechteckimpulsen C, welche je die Dauer W2 aufweisen, wie in Fig. 2 ersichtlich ist.

Die Gebrauchs- und Wirkungsweise der beschriebenen Einrichtung zur Helligkeitsregulierung der Fluoreszenzlampe 24 ist wie folgt:

Wenn die Netzanschlussklemmen 21 und 22 an eine Wechselstromquelle mit 220 V Nennspannung angeschlossen sind, wird der Kondensator 23 auf eine Gleichspannung von etwa 311 V aufgeladen. Es sei nun angenommen, dass der astabile Multivibrator 46 in Betrieb ist und die Ausgangsspannung $u_o$ erzeugt, die im obersten Diagramm der Fig. 2 gezeigt ist. Mittels des Kondensators 50, der Diode 57 und des Impulstransformators 52 werden jeweils bei den ansteigenden Flanken der rechteckigen Spannungsimpulse A des Ausgangssignals $u_o$ die Nadelimpulse B hervorgerufen und als Taktsignal u1 an die Anschlussklemmen 35 und 36 der ersten Schalteranordnung 31 geliefert. Durch jeden Nadelimpuls B wird der Thyristor 34 in den leitenden Zustand gesteuert, wodurch die aus der Fluoreszenzlampe 24 und der Vorschaltimpedanz 25 gebildete Reihenschaltung 28 an die Gleichstromquelle 20, 23 angeschlossen wird. Der Kondensator 26 wird aufgeladen, wobei im genannten Stromkreis ein Stromimpuls D1 fliesst, wie im untersten Diagramm der Fig. 2 ersichtlich ist. Der Thyristor 34 behält seinen leitenden Zustand bis zum Ende des Stromimpulses D. Die Dauer $W_i$ des Stromimpulses D1 übersteigt die Dauer W1 des steuernden Nadelimpulses B und ist - ebenso wie die Form des Stromimpulses D1 - ausschliesslich von den elektrischen Eigenschaften der Reihenschaltung 28, insbesondere der Kapazität des Kondensators 26, der Induktivität der Induktionsspule 27 und
der Güte des durch diese beiden Schaltungskomponenten gebildeten Resonanzgliedes, abhängig. Jeweils bei der absteigenden
Flanke der Rechteckimpulse A des Ausgangssignals $u_o$ wird der
monostabile Multivibrator 62 angesteuert, dessen Ausgang 65
die rechteckförmigen Spannungsimpulse C gemäss Fig. 2 als Taktsignal u2 an die Anschlussklemmen 41 und 42 der zweiten Schalteranordnung 32 liefert. Durch jeden Spannungsimpuls C wird der
Transistor 38 jeweils während der Dauer W2 dieses Spannungsimpulses in den leitenden Zustand gesteuert, wodurch die Reihenschaltung 28 kurzgeschlossen wird. Die im Kondensator 26 gespeicherte elektrische Ladung ruft nun einen Stromimpuls D2
hervor, dessen Polarität jener des Stromimpulses D1 entgegengesetzt ist, wie das unterste Diagramm der Fig. 2 zeigt. Der
Kondensator 26 wird hierbei entladen. Die Form und die Dauer
des Stromimpulses D2 sind praktisch gleich wie beim Stromimpuls D1. Da der Transistor 38 seinen leitenden Zustand unabhängig von der Dauer des Stromflusses jeweils nur so lange beibehält, wie der Taktimpuls C dauert, ist die Dauer W2 eines jeden Taktimpulses C etwas länger als die Dauer $W_i$ der Stromimpulse D2 eingestellt.

In jeder folgenden Periode des Ausgangssignals $u_o$ wiederholen
sich die beschriebenen Vorgänge, so dass durch die Reihenschaltung 28 und somit die Fluoreszenzlampe 24 abwechselnd positive
Stromimpulse D1 und negative Stromimpulse D2 fliessen, durch
welche die Lampe 24 zum Leuchten gebracht wird. Die Wiederholungsfrequenz der Stromimpulspaare D1, D2 stimmt mit der Wiederholungsfrequenz f der Rechteckimpulse A des Ausgangssignals
$u_o$ überein. Wird die Frequenz f durch ein (nicht gezeigtes)
Einstellorgan am astabilen Multivibrator 46 verändert, ändert
sich damit auch der zeitliche Abstand der aufeinanderfolgenden
Stromimpulse D1 und D2, während die Form und die Dauer der
einzelnen Stromimpulse D1 und D2 unverändert bleiben. Wenn die
Frequenz f vermindert wird, tritt pro Zeiteinheit eine geringere Anzahl Stromimpulse D1 und D2 auf, wobei die Helligkeit der
Fluoreszenzlampe 24 entsprechend reduziert wird. Wenn umgekehrt die Frequenz f erhöht wird, fliessen pro Zeiteinheit mehr Stromimpulse D1 und D2, wobei die Helligkeit der Lampe 24 entsprechend steigt. Die grösstmögliche Helligkeit der Lampe 24 wird erreicht, wenn die Nadelimpulse B des Taktsignals u1 jeweils nahezu ohne Zeitverzögerung an die Rechteckimpulse C des Taktsignals u2 anschliessen.

Die Dioden 33 und 37 dienen dazu, jeweils ein Zurückschwingen des Stromes i am Ende eines jeden Stromimpulses D1 bzw. D2 zu verhüten.

Es hat sich als zweckmässig erwiesen, die Wiederholungsfrequenz f der Rechteckimpulse A des Ausgangssignals $u_o$ im Bereich zwischen 100 Hz und 100 kHz zu wählen. Die Hilfsstromquelle 47 braucht - entgegen der vereinfachten Darstellung in Fig. 1 - nicht eine Batterie zu sein, sondern kann durch ein Netzanschlussgerät oder eine Schaltungsanordnung zum Ableiten des Hilfsspeisestromes von der Gleichstromquelle 20, 23 ersetzt sein.

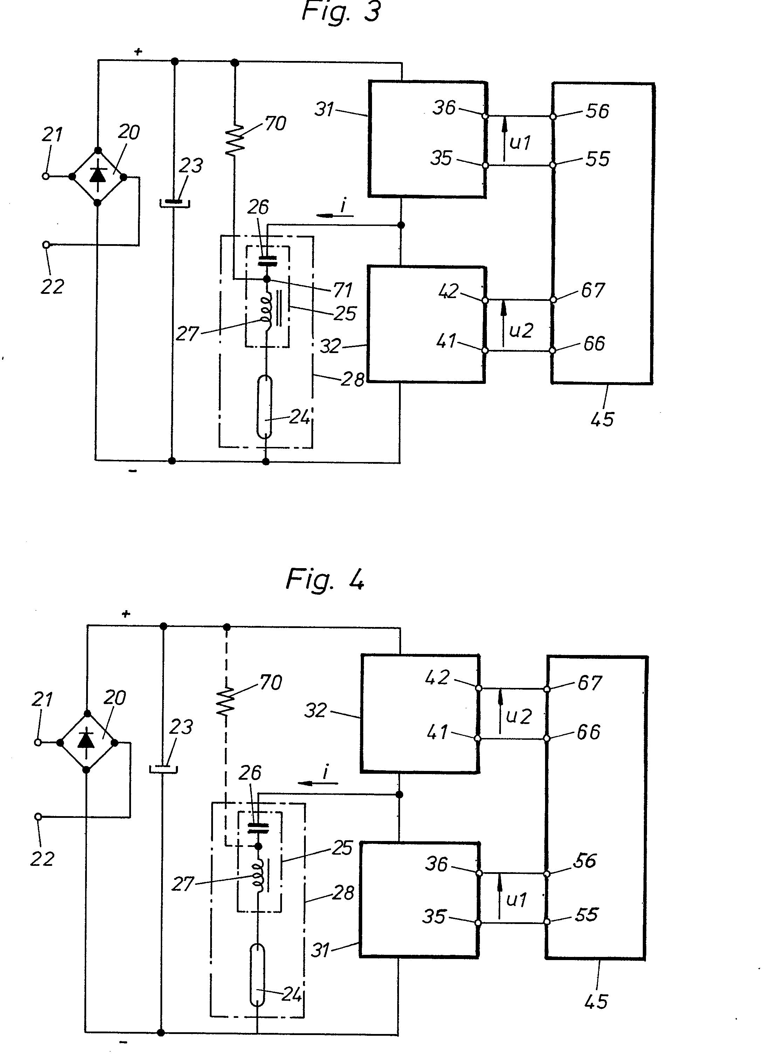

Die in Fig. 3 vereinfacht gezeigte Ausführungsform der Einrichtung zur Helligkeitsregulierung unterscheidet sich von jener gemäss Fig. 1 nur dadurch, dass zusätzlich ein elektrischer Widerstand 70 einerseits an den Pluspol der Gleichstromquelle 20, 23 und anderseits an einen Punkt 71 zwischen dem Kondensator 26 und der Induktionsspule 27 angeschlossen ist. Der Widerstandswert des Widerstandes 70 ist derart bemessen, dass durch die Fluoreszenzlampe 24 ständig ein verhältnismässig schwacher Gleichstrom fliesst, der den Stromimpulsen D1 und D2 gemäss Fig. 2 überlagert ist. Durch diese Massnahme wird die Zündeigenschaft der Fluoreszenzlampe 24 verbessert.

Fig. 4 veranschaulicht in vereinfachter Darstellung eine Ausführungsform der Einrichtung, die sich von jener gemäss Fig. 1 lediglich dadurch unterscheidet, dass die Lagen der beiden elektronischen Schalteranordnungen 31 und 32 vertauscht sind. Somit erfolgt jeweils die Aufladung des Kondensators 26 über den Transistor 38 in Steuerabhängigkeit von den rechteckförmigen Spannungsimpulsen C des Taktsignals u2, und die Entladung des Kondensators 26 geschieht über den Thyristor 34 in Steuerabhängigkeit von den Nadelimpulsen B des Taktsignals u1. Im übrigen ist die Funktions- und Wirkungsweise der Einrichtung gleich wie beim ersten Ausführungsbeispiel gemäss den Fig. 1 und 2. Der zusätzliche Widerstand 70 zum Verbessern der Zündeigenschaft der Fluoreszenzlampe 24 kann auch bei dem Ausführungsbeispiel nach Fig. 4 vorgesehen werden, wie mit gestrichelten Linien angedeutet ist.

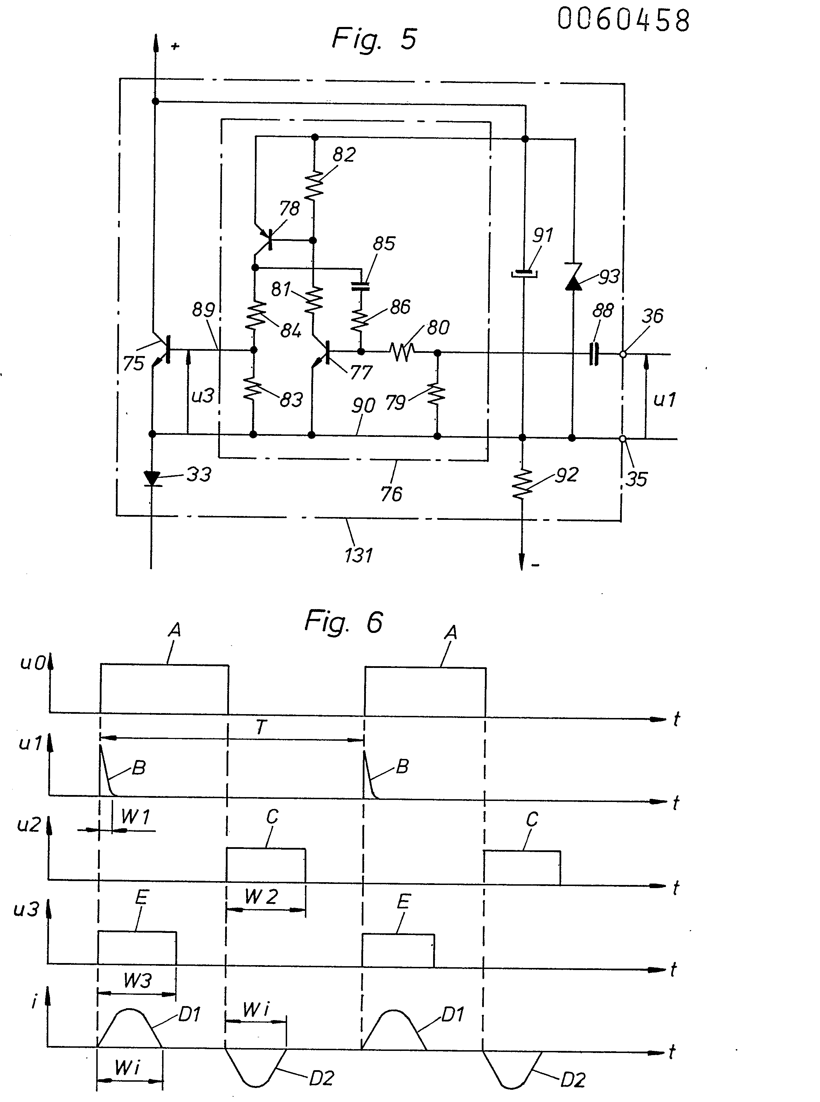

In den Fig. 1, 3 und 4 wie auch in allen noch zu beschreibenden übrigen Ausführungsbeispielen der Einrichtung zur Helligkeitssteuerung kann die den Thyristor 34 enthaltende elektronische Schalteranordnung 31 durch eine anders ausgebildete Schalteranordnung 131 gemäss Fig. 5 ersetzt sein. Diese weist anstelle des Thyristors 34 (Fig. 1) nun einen Leistungstransistor 75 auf, welcher aber nicht mehr unmittelbar durch die Nadelimpulse B des Taktsignals u1 angesteuert wird, sondern durch ein Steuersignal u3, das mittels eines monostabilen Multivibrators 76 in Steuerabhängigkeit von dem Taktsignal u1 erzeugt wird. Der Multivibrator 76 besteht im wesentlichen aus einem zweistufigen Gleichspannungsverstärker, welcher zwei Transistoren 77 und 78 sowie eine Anzahl Widerstände 79 bis 84 aufweist und über einen Kondensator 85 und einen Widerstand 86 rückgekoppelt ist. Der Signaleingang 87 des Multivibrators 76 ist über einen Kondensator 88 mit der Anschlussklemme 36 verbunden, während der Signalausgang 89 des Multivibrators 76 an die Basis des Leistungstransistors 75 angeschlossen ist. Der Masseleiter 90 des Multivibrators 76 steht sowohl mit der Anschlussklemme 35 als auch mit dem Emitter des Leistungstransistors 75 in Verbindung. Als Energiequelle zur Speisung des monostabilen Multivibrators 76 ist ein Speicherkondensator 91 vorgesehen, der einerseits mit dem Pluspol der Gleichstromquelle 20, 23 (Fig. 1) und anderseits über einen Vorschaltwiderstand 92 mit dem Minuspol der Gleichstromquelle 20, 23 verbunden ist. Zur Begrenzung der über dem Speicherkondensator 91 liegenden Gleichspannung ist eine Zenerdiode 93 dem Speicherkondensator 91 parallel geschaltet.

Die Gebrauchs- und Wirkungsweise einer Einrichtung gemäss Fig. 1, in welcher die elektronische Schalteranordnung 31 durch die in Fig. 5 gezeigte Schalteranordnung ersetzt ist, wird nachfolgend unter Bezugnahme auf Fig. 6 erläutert:

Jeweils bei den ansteigenden Flanken der Rechteckimpulse A des Ausgangssignals $u_o$ des astabilen Multivibrators 46 (Fig. 1) wird an die Anschlussklemmen 35 und 36 der Schalteranordnung 131 (Fig. 5) ein Nadelimpuls B von vergleichsweise kurzer Dauer W1 geliefert. Die Nadelimpulse B bilden das Taktsignal u1 zum Ansteuern des monostabilen Multivibrators 76. Durch jeden Nadelimpuls B wird der Multivibrator 76 veranlasst, einen rechteckförmigen Spannungsimpuls E zu erzeugen, dessen Dauer W3 beträchtlich länger als die Dauer W1 des betreffenden Nadelimpulses B, aber kürzer als die halbe Periode T des Ausgangssignals $u_o$ ist. Die Folge der Rechteckimpulse E bildet das Steuersignal u3, durch welches der Leistungstransistor 75 gesteuert wird. Jeweils während der Dauer W3 eines Rechteckimpulses E ist der Leistungstransistor 75 in leitendem Zustand und somit die aus der Fluoreszenzlampe 24 und der Vorschaltimpedanz 25 gebildete Reihenschaltung 28 an die Gleichstromquelle 20, 23 angeschlossen (Fig. 1). Der Kondensator 26 wird dann aufgeladen, wobei ein Stromimpuls D1 durch die genannte Reihenschaltung 28 fliesst. Die Dauer W2 der Steuerimpulse E ist so eingestellt, dass sie die Dauer $W_i$ jedes Stromimpulses D1 ein wenig übersteigt. Jeweils bei den absteigenden Flanken der Rechteckimpulse A des Ausgangssignals $u_o$ erzeugt der in der Steuereinrichtung 45 enthaltene monostabile Multivibrator 62 (Fig. 1) einen rechteckförmigen Spannungsimpuls C, dessen Dauer W2 etwa gleich der Dauer W3 eines jeden der vorerwähnten Spannungsimpulse E ist. Die Folge der Spannungsimpulse C bildet das Taktsignal u2 zum Steuern des Leistungstransistors 38 in der zweiten elektronischen Schalteranordnung 32 (Fig. 1).

Der Leistungstransistor 38 ist jeweils während der Dauer W2 eines Spannungsimpulses C leitend, wodurch der zuvor aufgeladene Kondensator 26 entladen und ein Stromimpuls D2 erzeugt wird, dessen Polarität jener der Stromimpulse D1 entgegengesetzt ist. Die Folge der alternierenden Stromimpulse D1 und D2 bringt die Fluoreszenzlampe 24 zum Leuchten, wobei die Helligkeit der Lampe von der Wiederholungsfrequenz der Impulse abhängt, wie in bezug auf das erste Ausführungsbeispiel erläutert wurde.

Die in Fig. 5 gezeigte Anordnung des Speicherkondensators 91 und des Vorschaltwiderstandes 92 macht eine besondere Hilfsstromquelle für die Speisung des monostabilen Multivibrators 76 entbehrlich. Auf analoge Weise kann auch die Speisung des astabilen Multivibrators 46 und des monostabilen Multivibrators 62 in der Steuereinrichtung 45 (Fig. 1) erfolgen.

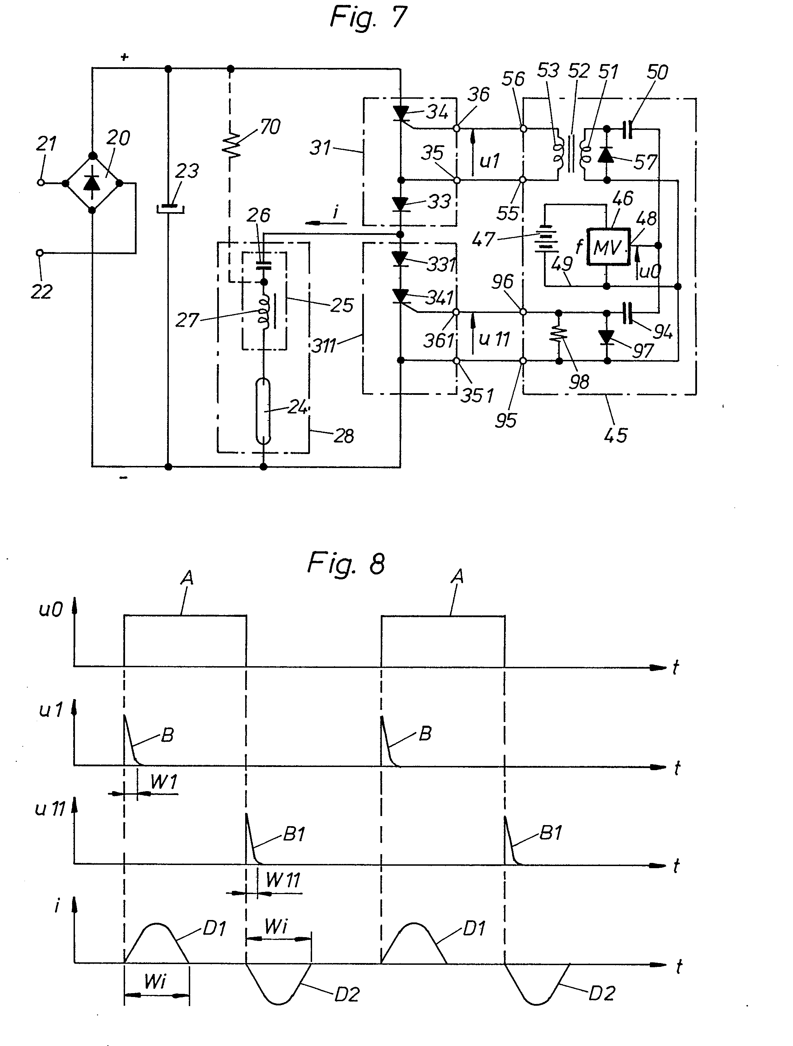

In Fig. 7 ist eine zur Helligkeitsregulierung der Fluoreszenzlampe 24 geeignete Einrichtung gezeigt, die sich von jener gemäss Fig. 1 im wesentlichen dadurch unterscheidet, dass anstelle der den Leistungstransistor 38 aufweisenden elektronischen Schalteranordnung 32 (Fig. 1) nun eine gleich wie die erste Schalteranordnung 31 ausgebildete zweite Schalteranordnung 311 vorhanden ist. Die letztere weist ebenfalls einen Thyristor 341, eine Diode 331 und zwei Anschlussklemmen 351 und 361 zum Zuführen eines Taktsignals u11 auf, das aus einer Folge von Nadelimpulsen B1 besteht, deren Dauer W11 mit jener der Nadelimpulse B des Taktsignals u1 etwa übereinstimmt. Die Steuereinrichtung zum Erzeugen der beiden Taktsignale u1 und u11 weist wie beim ersten Ausführungsbeispiel einen astabilen Multivibrator 46 und eine zur Speisung desselben dienende Hilfsstromquelle 47 auf. Der Signalausgang 48 und der Masseleiter 49 des Multivibrators 46 sind über einen Kondensator 50 bzw. direkt mit den Enden der Primärwicklung 51 eines Impulstransformators 52 verbunden, dessen Sekundärwicklung 53 das Taktsignal u1 an die Ausgangsklemmen 55 und 56 liefert. Eine Diode 57 ist der Primärwicklung 51 des Impulstransformators parallel geschaltet, um zu erreichen, dass das Taktsignal u1 ausschliesslich aus Nadelimpulsen B besteht, die bei den aufsteigenden Flanken der Rechteckimpulse A des Ausgangssignals $u_o$ auftreten. Ferner sind der Masseleiter 49 und der Signalausgang 48 des Multivibrators 46 direkt bzw. über einen Kondensator 94 mit zwei Ausgangsklemmen 95 und 96 verbunden, von denen das Taktsignal u11 zu den Anschlussklemmen 351 und 361 der Schaltungsanordnung 311 geleitet ist. Zwischen den beiden Ausgangsklemmen 95 und 96 sind eine Diode 97 und ein Widerstand 98 eingeschaltet, um zu erreichen, dass das Taktsignal u11 ausschliesslich, aus Nadelimpulsen B1 besteht, die jeweils bei den abfallenden Flanken der Rechteckimpulse A des Ausgangssignals $u_o$ auftreten.

In Fig. 8 sind die zeitlichen Zusammenhänge zwischen dem Ausgangssignal $u_o$, den beiden Taktsignalen u1 und u11 sowie den resultierenden Stromimpulsen D1 und D2 in der aus der Fluoreszenzlampe 24 und der Vorschaltimpedanz 25 gebildeten Reihenschaltung 28 dargestellt. Man erkennt, dass jeder der Thyristoren 34 bzw. 341 in den beiden elektronischen Schalteranordnungen 31 und 311 jeweils durch einen Nadelimpuls B bzw. B1 angesteuert wird, dessen Dauer W1 bzw. W11 beträchtlich kürzer ist als die Dauer $W_i$ des resultierenden Stromimpulses D1 bzw. D2. Die Thyristoren bleiben jeweils von selbst in leitendem Zustand solange der betreffende Stromimpuls dauert.

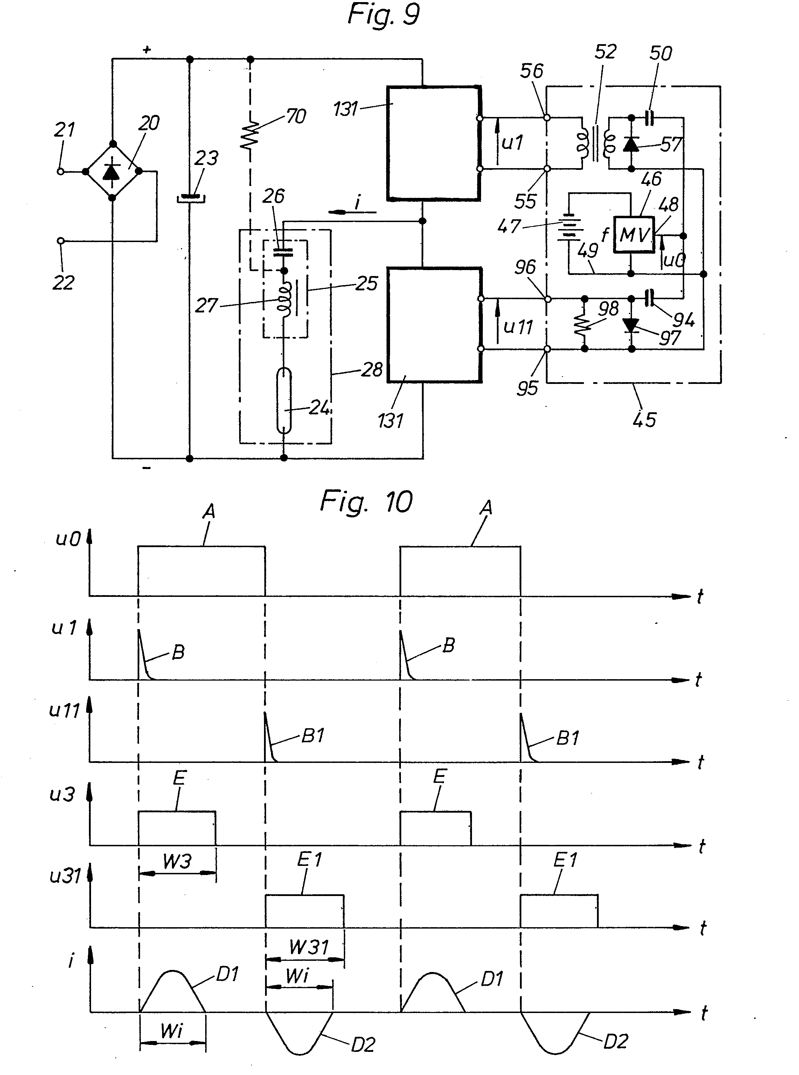

Das in Fig. 9 veranschaulichte weitere Ausführungsbeispiel unterscheidet sich schaltungsmässig von jenem gemäss Fig. 7 nur dadurch, dass anstelle der beiden elektronischen Schalteranordnungen 31 und 311 mit je einem Thyristor (Fig. 7) nun zwei einander gleiche Schalteranordnungen 131 mit der Ausbildung gemäss Fig. 5 vorhanden sind. Hierbei ergibt sich die in Fig. 10 dargestellte Wirkungsweise: Die beiden Taktsignale u1 und u11, welche je aus einer Folge von Nadelimpulsen B bzw. B1 bestehen, steuern jeweils den monostabilen Multivibrator 76 (Fig. 5) in der betreffenden Schalteranordnung 131 an. Diese Multivibratoren erzeugen je ein Steuersignal u3 bzw. u31 in der Form einer Folge von rechteckförmigen Spannungsimpulsen E bzw. E1 zum
Steuern des zugeordneten Leistungstransistors 75 (Fig. 5).
Letzterer ist jeweils während der ganzen Dauer W3 bzw. W31 des
betreffenden Steuerimpulses E bzw. E1 in leitendem Zustand. Die
resultierenden Stromimpulse D1 und D2 in der durch die Fluoreszenzlampe 24 und die Vorschaltimpedanz 25 gebildeten Reihenschaltung 28 haben jeweils eine Dauer $W_i$, die wenig kürzer als
die Dauer W3 bzw. W31 der Steuerimpulse E und E1 ist.

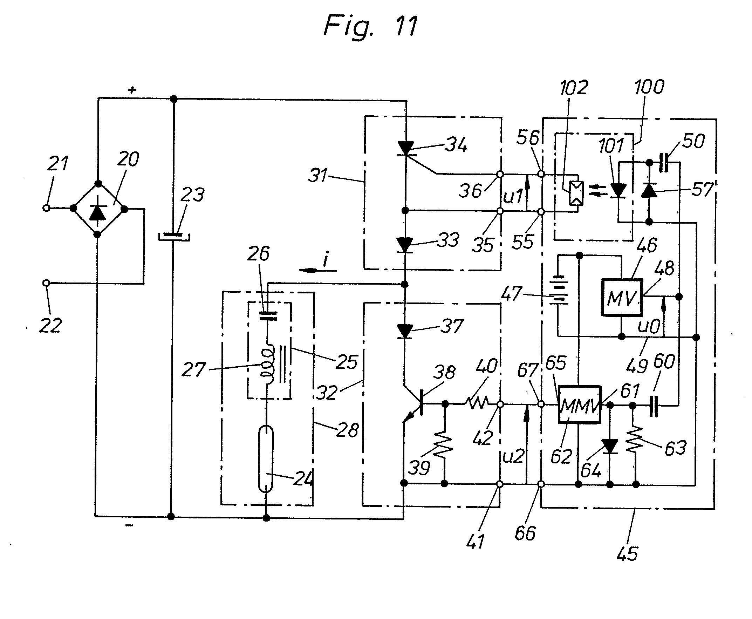

In Fig. 11 ist schliesslich noch das Schaltschema einer Ausführungsform der Helligkeitssteuereinrichtung gezeigt, die sich
von jener gemäss Fig. 1 lediglich dadurch unterscheidet, dass
anstelle des Impulstransformators 52 (Fig. 1) nun eine opto-
elektrische Signalübertragungsvorrichtung 100 vorhanden ist.
Letztere weist eine als Lichtsender dienende Leuchtdiode 101
und ein als Lichtempfänger wirkendes Photoelement 102 auf, welches das Taktsignal u1 an die Ausgangsklemmen 55 und 56 liefert. Die Gebrauchs- und Wirkungsweise der Einrichtung bleibt
grundsätzlich gleich wie anhand der Fig. 2 beschrieben worden
ist.

Selbstverständlich kann auch in den Ausführungsbeispielen nach
den Fig. 7 und 9 der Impulstransformator 52 durch eine opto-
elektrische Uebertragungsvorrichtung 100 gemäss Fig. 11 ersetzt sein.

Allen beschriebenen Ausführungsbeispielen der erfindungsgemässen Einrichtung zum Regulieren der Helligkeit einer Fluoreszenzlampe ist gemeinsam, dass mindestens eine der beiden elektronischen Schalteranordnungen 31, 32 bzw. 131, 32 bzw. 31, 311 bzw.
131, 131 durch Taktimpulse ansteuerbar ist, deren zeitliche
Dauer W1 bzw. W11 kurz ist im Vergleich zur Dauer $W_i$ eines jeden Stromimpulses D1 bzw. D2 durch die Lampe 24, und dass die
betreffende Schalteranordnung einen Thyristor 34 bzw. 341 oder
gleichwertige andere Schaltungskomponenten 75 bis 86 aufweist,
um jeweils den leitenden Zustand der Schaltungsanordnung über die Dauer eines einzelnen Taktimpulses hinaus während der ganzen Dauer des betreffenden Stromimpulses aufrecht zu erhalten. Hierdurch wird ein betriebssicheres Arbeiten der Steuereinrichtung ohne gegenseitige Störung der beiden elektronischen Schalteranordnungen erzielt. Ein weiterer Vorteil ist darin zu sehen, dass die vergleichsweise kurzen Taktimpulse ohne Schwierigkeiten mittels eines Impulstransformators 52 oder einer opto-elektrischen Impulsübertragungsvorrichtung 100 übertragen werden können, weshalb die unterschiedlichen Potentiale der Taktsignaleingänge 35, 36 und 41, 42 bzw. 35, 36 und 351, 361 der beiden elektronischen Schalteranordnungen praktisch keine nennenswerte Komplikation der Steuereinrichtung zum Erzeugen der Taktimpulse verursachen. Insbesondere ein Impulstransformator 52 für die Verwendung in der hier beschriebenen Einrichtung lässt sich preisgünstig beschaffen.

Bei allen beschriebenen Ausführungsbeispielen kann die in Reihe mit der Fluoreszenzlampe 24 angeordnete Vorschaltimpedanz 25 anstatt aus dem Kondensator 26 und der Induktionsspule 27 gegebenenfalls auch aus einem Kondensator und einem Widerstand oder aber aus einem Kondensator allein bestehen, insbesondere wenn die in der Helligkeit zu regulierende Lampe 24 relativ geringe Nennleistung aufweist. Dann ergibt sich jedoch eine andere, technisch weniger günstige Form der Stromimpulse D1 und D2.

Ferner ist es bei allen gezeigten Ausführungsbeispielen möglich, eine zweite Reihenschaltung, die aus einer Fluoreszenzlampe und einer zugehörigen Vorschaltimpedanz besteht, parallel zu der mit der ersten Reihenschaltung 28 in Serie liegenden elektronischen Schalteranordnung 31 in Fig. 1, 3, 7 und 11 bzw. 32 in Fig. 4 bzw. 131 in Fig. 9 (oben) anzuordnen. In diesem Fall wird jeweils der Kondensator 26 der einen Vorschaltimpedanz 25 aufgeladen währenddem der Kondensator der zweiten Vorschaltimpedanz entladen wird, und umgekehrt. So lässt sich auf verhältnismässig einfache Weise die Helligkeit von zwei Fluoreszenzlampen gleichzeitig in gleicher Weise steuern.

Koch Elektronik + Apparatebau AG          0060458

- 1 -

<p align="center">P a t e n t a n s p r ü c h e</p>

1. Einrichtung zur Helligkeitsregulierung ⌐mindestens⌐ einer Fluoreszenzlampe, die zusammen mit einer Vorschaltimpedanz eine Reihenschaltung bildet, wobei die Vorschaltimpedanz zumindest einen elektrischen Kondensator aufweist, mit zwei durch Taktsignale steuerbaren elektronischen Schalteranordnungen, von denen die eine parallel zur genannten Reihenschaltung und die andere in Serie mit der Reihenschaltung liegt und dazu bestimmt ist, die Reihenschaltung mit einer Gleichstromquelle zur Speisung der Lampe zu verbinden, und mit einer elektronischen Steuereinrichtung zum Erzeugen der Taktsignale zum Steuern der beiden Schalteranordnungen derart, dass diese periodisch abwechselnd einen leitenden Zustand annehmen, so dass durch aufeinanderfolgendes Laden und Entladen des Kondensators der Vorschaltimpedanz ein durch die Lampe fliessender Strom in Form von Stromimpulsen mit wechselnder Polarität entsteht, wobei die Kurvenform und die Dauer eines jeden Stromimpulses durch die elektrischen Eigenschaften der genannten Reihenschaltung gegeben sind und die die Helligkeit der Lampe bestimmende Wiederholungsfrequenz der Stromimpulse von der einstellbaren Frequenz der Taktsignale abhängig ist, dadurch gekennzeichnet, dass mindestens eine (31: 131: 311) der beiden elektronischen Schalteranordnungen (31, 32: 131, 32: 31, 311: 131, 131) derart ausgebildet ist, dass deren leitender Zustand jeweils nach Ansteuerung mit einem im Vergleich zur Dauer jedes Stromimpulses (D1, D2) kurzen Taktimpuls (B, B1) bis zum Ende des betreffenden Stromimpulses aufrecht erhalten bleibt, und dass die elektronische Steuereinrichtung (45) zur Erzeugung von galvanisch getrennten Taktsignalen (u1, u2; u1, u11) für die beiden
Schalteranordnungen ausgebildet ist und jeder Taktimpuls
(B, B1) für die genannte mindestens eine Schalteranordnung zeitlich kürzer ist als die Dauer eines jeden Stromimpulses.

2. Einrichtung nach Anspruch 1, dadurch gekennzeichnet, dass die eine Schalteranordung (31) einen steuerbaren
Gleichrichter (34) aufweist, der durch die im Vergleich zur
Dauer eines jeden Stromimpulses (D1, D2) kurzen Taktimpulse (B) gesteuert ist, und dass die andere Schalteranordnung
(32) einen Leistungstransistor (38) aufweist, der durch Taktimpulse (C) gesteuert ist, die jeweils zeitlich mindestens
so lang wie die Dauer eines jeden Stromimpulses (D1, D2) sind.

3. Einrichtung nach Anspruch 1, dadurch gekennzeichnet, dass beide Schalteranordnungen (31, 311) je einen
steuerbaren Gleichrichter (34, 341) aufweisen und die Taktimpulse (B, B1) für die Steuerung jedes dieser Gleichrichter (34, 341) jeweils zeitlich kürzer sind als die Dauer
eines jeden Stromimpulses (D1, D2).

4. Einrichtung nach Anspruch 1, dadurch gekennzeichnet, dass die eine Schaltungsanordnung (131) einen ersten
Leistungstransistor (75) und eine monostabile Kippschaltungsanordnung (76) aufweist, welch letztere durch die im
Vergleich zur Dauer eines jeden Stromimpulses (D1, D2) kurzen Taktimpulses (B) gesteuert ist und an den ersten Leistungstransistor (75) Steuerimpulse (E) liefert, die jeweils zeitlich mindestens so lang wie die Dauer eines jeden Stromimpulses (D1, D2) sind, und dass die andere
Schaltungsanordnung (32) einen zweiten Leistungstransistor
(38) aufweist, der durch Taktimpulse (C) gesteuert ist, die
zeitlich mindestens so lang wie die Dauer eines jeden Stromimpulses (D1, D2) sind.

0060458

5. Einrichtung nach Anspruch 1, dadurch gekennzeichnet, dass beide Schaltungsanordnungen (131) je einen Leistungstransistor (75) und eine monostabile Kippschaltungsanordnung (76) aufweisen, die durch im Vergleich zur Dauer der Stromimpulse (D1, D2) kurze Taktimpulse (B, B11) gesteuert sind und an den betreffenden Leistungstransistor (75) Steuerimpulse (E, C) liefert, die jeweils zeitlich mindestens so lange wie die Dauer eines jeden Stromimpulses (D1, D2) sind.

6. Einrichtung nach Anspruch 4 oder 5, dadurch gekennzeichnet, dass die die monostabile Kippschaltungsanordnung (76) aufweisende Schalteranordnung (131) mindestens einen elektrischen Speicherkondensator (91) aufweist, der in Reihe mit einem Widerstand (92) an die Gleichstromquelle (20, 23) angeschlossen und als Energiequelle zur Speisung der Kippschaltungsanordnung (76) eingesetzt ist.

7. Einrichtung nach einem der Ansprüche 1 bis 6, dadurch gekennzeichnet, dass die zur Erzeugung der Taktimpulse dienende Steuereinrichtung (45) mindestens einen Impulstransformator (52) mit galvanisch getrennten Primär- und Sekundärwicklungen (51, 53) für die Uebertragung der im Vergleich zur Dauer eines jeden Stromimpulses (D1, D2) kurzen Taktimpulse (B) aufweist.

8. Einrichtung nach einem der Ansprüche 1 bis 6, dadurch gekennzeichnet, dass die zur Erzeugung der Taktimpulse dienende Steuereinrichtung (45) eine opto-elektrische Uebertragungsvorrichtung (100) mit einem Lichtsender (101) und einem von diesem galvanisch getrennten Lichtempfänger (102) für die Uebertragung der im Vergleich mit der Dauer eines jeden Stromimpulses (D1, D2) kurzen Taktimpulse (B) aufweist.

- 4 -                    0060458

9. Einrichtung nach einem der Ansprüche 1 bis 8, dadurch gekennzeichnet, dass die in Serie mit der Reihenschaltung (28) liegende Schalteranordnung (31) durch einen Widerstand (70) überbrückt ist, durch welchen der Lampe (24) zusätzlich ein Gleichstrom zugeführt ist.

**Fig. 1**

**Fig. 2**

2/6

0060458

Fig. 3

Fig. 4

3/6

0060458

Fig. 5

Fig. 6

## Fig. 7

## Fig. 8

Fig. 9

Fig. 10

0060458

Fig. 11